(19)

**Europäisches Patentamt**

**European Patent Office**

**Office européen des brevets**

(11) **EP 4 512 640 A1**

(12) **EUROPEAN PATENT APPLICATION**

(43) Date of publication:
26.02.2025 Bulletin 2025/09

(21) Application number: 24194637.5

(22) Date of filing: 14.08.2024

(51) International Patent Classification (IPC):
**B60C 19/00** (2006.01)

(52) Cooperative Patent Classification (CPC):
**B60C 19/002**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 22.08.2023 JP 2023134916

(71) Applicant: **Sumitomo Rubber Industries, Ltd.**
**Kobe-shi, Hyogo 651-0072 (JP)**

(72) Inventors:
• **SATO, Takuya**
**Kobe-shi, 651-0072 (JP)**
• **MATSUNAMI, Sho**
**Kobe-shi, 651-0072 (JP)**
• **YUKAWA, Naoki**
**Kobe-shi, 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **PNEUMATIC TIRE**

(57)     A pneumatic tire of the present invention includes a tire inner cavity 1B and a porous sound damper 10. The sound damper 10 is an annular body extending in a tire circumferential direction and is not adhered to a surface of the tire inner cavity 1B. An average thickness T (mm) of the sound damper 10 and an inner cavity surface radius R (mm) satisfy the following formula (1). An average circumferential length L (mm) in a circumferential direction of the sound damper 10 in a state where the sound damper 10 is removed from the pneumatic tire, and an inner cavity surface circumferential length C (mm), satisfy the following formulas (2) and (3).

$$0.04 \leq T/R \leq 0.18 \quad (1)$$

$$1.02 - 1.1 \times T/R \leq L/C \leq 0.95 + 1.4 \times T/R \quad (2)$$

$$L/C \leq 1.1 \quad (3)$$

EP 4 512 640 A1

Fig. 1

**Description**

BACKGROUND OF THE INVENTION

Field of the Invention

The present invention relates to a pneumatic tire.

Background Art

Japanese Laid-Open Patent Publication No. 2012-111382 proposes a sound-damper-equipped pneumatic tire including a sound damper composed of a ring-shaped sponge material on a tire inner cavity surface. The pneumatic tire allows the sound damper to be mounted on the tire inner cavity surface without using any adhesive.

In the case where a porous sound damper is placed on the surface of a tire inner cavity as in the tire of Japanese Laid-Open Patent Publication No. 2012-111382, depending on the thickness or the length in the circumferential direction of the sound damper, so-called buckling in which a part of the sound damper becomes convex inward in the tire radial direction along with running of the tire, may occur, which may deteriorate the uniformity of the tire or decrease the durability of the sound damper.

The present invention has been made in view of the above circumstances, and a main object of the present invention is to, in a pneumatic tire having a sound damper placed on a tire inner cavity, maintain the uniformity of the tire and the durability of the sound damper.

SUMMARY OF THE INVENTION

The present invention is directed to a pneumatic tire including a tire inner cavity and a porous sound damper placed in the tire inner cavity, wherein: the sound damper is an annular body extending in a tire circumferential direction and is not adhered to a surface of the tire inner cavity; the sound damper has a circumferential direction of the annular body and a thickness direction which is the same direction as a radial direction of the annular body; an average thickness T (mm) of the sound damper and an inner cavity surface radius R (mm) which is a distance in a tire radial direction from a tire rotation axis to the surface of the tire inner cavity on a tire equator plane, satisfy the following formula (1); and an average circumferential length L (mm) in the circumferential direction of the sound damper in a state where the sound damper is removed from the pneumatic tire, and an inner cavity surface circumferential length C (mm) which is a length in the tire circumferential direction of the surface of the tire inner cavity on the tire equator plane, satisfy the following formulas (2) and (3),

$$0.04 \leq T/R \leq 0.18 \quad (1),$$

$$1.02 - 1.1 \times T/R \leq L/C \leq 0.95 + 1.4 \times T/R \quad (2),$$

and

$$L/C \leq 1.1 \quad (3).$$

As a result of adopting the above-described configuration, the pneumatic tire of the present invention can maintain its uniformity and the durability of the sound damper.

BRIEF DESCRIPTION OF THE DRAWINGS

FIG. 1 is a tire meridian cross-sectional view showing a pneumatic tire of one embodiment of the present invention;
FIG. 2 is an enlarged perspective view of a pneumatic tire body and a sound damper in FIG. 1;
FIG. 3 shows the relationship between the dimensions of the sound damper and the occurrence of damage, etc., to the sound damper;
FIG. 4 is an enlarged cross-sectional view of the sound damper in FIG. 1;
FIG. 5 is a conceptual diagram showing a side surface of the tire in FIG. 1;
FIG. 6 shows enlarged views of both ends in the circumferential direction of a sound damper of another embodiment;

FIG. 7 shows enlarged views of both ends in the circumferential direction of a sound damper of still another embodiment; and

FIG. 8 shows enlarged views of both ends in the circumferential direction of a sound damper of still another embodiment.

DETAILED DESCRIPTION

Hereinafter, one embodiment of the present invention will be described with reference to the drawings. The drawings are depicted so as to include the features of the present invention, but may contain exaggerated expressions and expressions that differ from the dimensional ratio of the actual structure in order to help the understanding of the present invention. In addition, the same or common elements are denoted by the same reference characters throughout each embodiment, and the redundant description thereof is omitted.

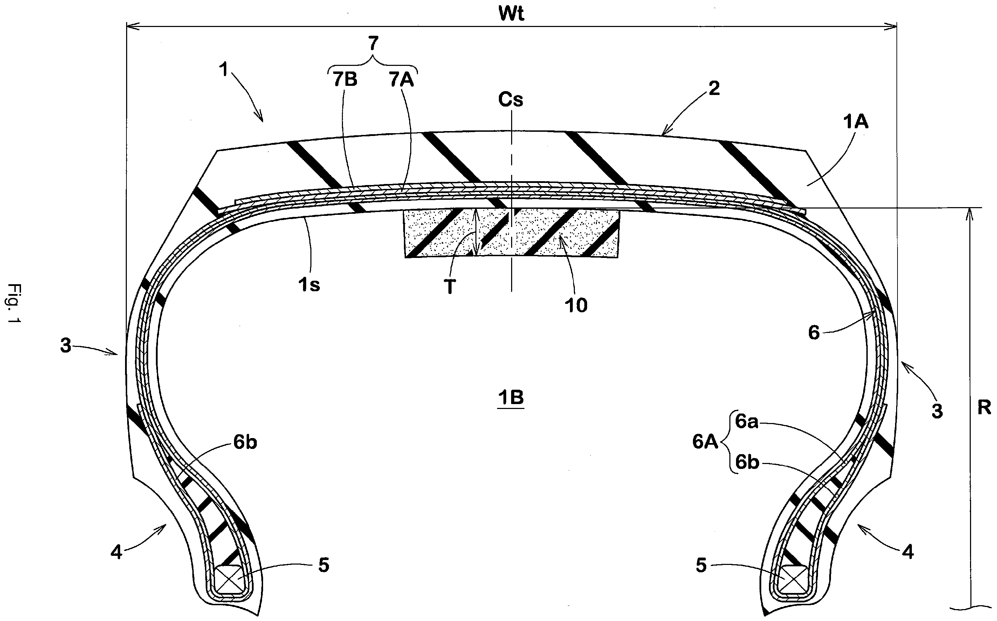

FIG. 1 a tire meridian cross-sectional view of a pneumatic tire (hereinafter sometimes referred to simply as "tire") 1, showing one embodiment of the present invention, in a standardized state. FIG. 1 shows a cross-section of the tire 1 when the tire 1 extending in an annular shape is cut along a virtual plane passing through the tire rotation axis and orthogonal to the tire circumferential direction. As shown in FIG. 1, in the present embodiment, a pneumatic tire 1 for a passenger car is shown. However, the present invention may be applied to, for example, a heavy duty pneumatic tire 1.

In the case of a pneumatic tire for which various standards are defined, the "standardized state" is a state where the tire is fitted on a standardized rim and inflated to a standardized internal pressure and no load is applied to the tire. In the case of a tire for which various standards are not defined, the standardized state means a standard use state, corresponding to the purpose of use of the tire, where the tire is not mounted on a vehicle and no load is applied to the tire. In the present specification, unless otherwise specified, dimensions and the like of components of the tire are values measured in the standardized state. In addition, dimensions of components (e.g., an inner member of the tire 1) that cannot be measured in the standardized state are values measured in a state where the tire 1 is made to approximate the standardized state as much as possible.

The "standardized rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The tire 1 of the present embodiment is mounted, for example, on a vehicle equipped with a puncture repair kit including a puncture sealing agent. The puncture repair kit performs puncture repair by injecting the puncture sealing agent through the air valve of a punctured tire. The puncture sealing agent injected into the tire can harden when passing through the puncture hole to seal the puncture hole. The tire 1 of the present invention allows puncture repair to be performed by injecting the puncture sealing agent into the tire through the air valve thereof as described above. Therefore, the tire 1 of the present embodiment has such stiffness in a tread portion 2 thereof that a sealed puncture hole does not reopen even when the tire 1 runs after puncture repair, and specifically, the tire 1 includes at least a carcass 6 and a belt layer 7 described below.

The carcass 6 extends from a bead portion 4 on one side through a sidewall portion 3 on the one side, the tread portion 2, and a sidewall portion 3 on the other side to a bead portion 4 on the other side. The carcass 6 has at least one carcass ply, and has two carcass plies 6A in the present embodiment. Each carcass ply 6A is formed, for example, by covering an array of carcass cords with a topping rubber. The carcass cords are placed, for example, at an angle of 75 to 90° with respect to the tire circumferential direction. For example, organic fibers such as polyester fibers, nylon fibers, rayon fibers, polyethylene naphthalate fibers, and aramid fibers are used for the carcass cords.

The carcass ply 6A includes, for example, a body portion 6a and turned-up portions 6b. The body portion 6a extends from the tread portion 2 through each sidewall portion 3 to each bead core 5. Each turned-up portion 6b is connected to the body portion 6a, is turned up from the inner side to the outer side in the tire axial direction around the bead core 5, and extends outward in the tire radial direction.

The belt layer 7 is placed outward of the carcass 6 in the tire radial direction in the tread portion 2. The belt layer 7 includes at least one belt ply, and the belt layer 7 of the present embodiment is composed of two belt plies 7A and 7B. Each of the belt plies 7A and 7B is formed, for example, by covering an array of belt cords with a topping rubber.

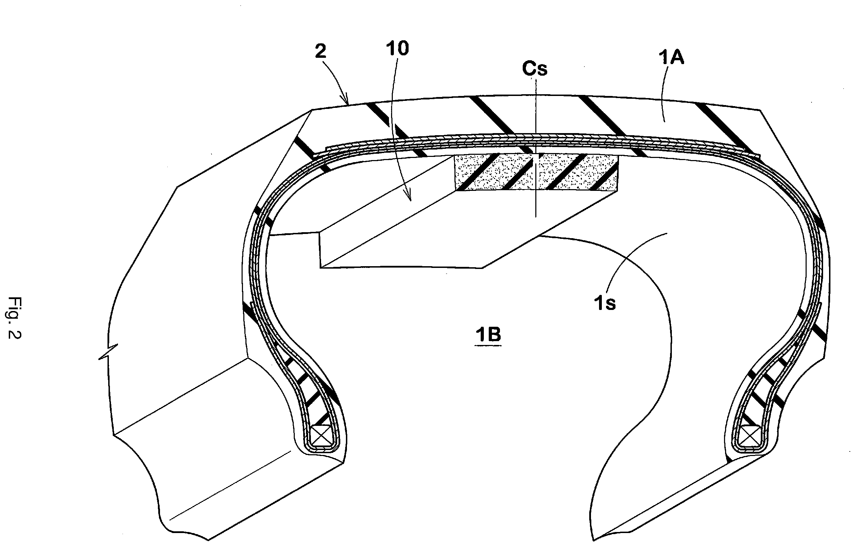

The tire 1 of the present invention includes a tire inner cavity 1B, a pneumatic tire body 1A defining the tire inner cavity 1B, and a porous sound damper 10 placed in the tire inner cavity 1B. FIG. 2 shows an enlarged perspective view of the pneumatic tire body 1A and the sound damper 10 in FIG. 1. As shown in FIG. 1 and FIG. 2, the sound damper 10 can absorb air vibrations inside the tire 1 during running, and serves to reduce noise generated by the tire 1.

The sound damper 10 of the present invention is an annular body extending in the tire circumferential direction and is not adhered to a surface 1s of the tire inner cavity 1B. That is, since an adhesive for adhering the sound damper 10 is not used, the tire 1 of the present invention is lightweight and has excellent workability of mounting the sound damper 10 during tire manufacturing. Furthermore, when the tire 1 of the present invention is punctured and puncture repair is attempted using a puncture sealing agent, since the sound damper 10 is not adhered to the surface 1s of the tire inner cavity 1B, the puncture sealing agent easily reaches the puncture hole, so that excellent puncture repair performance can be exhibited.

The sound damper 10 has the circumferential direction of the annular body, a thickness direction which is the same direction as the radial direction of the annular body, and a width direction which is orthogonal to the thickness direction and the circumferential direction. In the present embodiment, the circumferential direction of the sound damper 10 substantially coincides with the tire circumferential direction. The thickness direction of the sound damper 10 substantially coincides with the tire radial direction. The width direction of the sound damper 10 substantially coincides with the tire axial direction. Here, the above "substantially coincide" includes a mode in which the angular difference between the circumferential direction, the thickness direction, or the width direction and the tire circumferential direction, the tire radial direction, or the tire axial direction is 5° or less.

As shown in FIG. 1, in the present invention, an average thickness T (mm) of the sound damper 10 and an inner cavity surface radius R (mm) which is the distance in the tire radial direction from the tire rotation axis to the surface 1s of the tire inner cavity 1B on a tire equator plane Cs, satisfy the following formula (1). As the average thickness T, a value obtained by dividing the sum of measured thicknesses of a plurality of minute regions, into which the sound damper 10 is virtually divided and which include the outer and inner surfaces in the thickness direction, by the number of the minute regions, is adopted.

$$0.04 \leq T/R \leq 0.18 \qquad (1)$$

In the present invention, an average circumferential length L (mm) in the circumferential direction of the sound damper 10 in a state where the sound damper 10 is removed from the tire 1, and an inner cavity surface circumferential length C (mm) which is the length in the tire circumferential direction of the surface 1s of the tire inner cavity 1B on the tire equator plane Cs, satisfy the following formulas (2) and (3). As the circumferential length L, a value obtained by dividing the sum of measured circumferential lengths of minute annular bodies, into which the sound damper 10 is virtually divided, by the number of the minute annular bodies, is adopted.

$$1.02 - 1.1 \times T/R \leq L/C \leq 0.95 + 1.4 \times T/R \qquad (2)$$

$$L/C \leq 1.1 \qquad (3)$$

By having the above-described features, the tire 1 of the present invention can maintain its uniformity and the durability of the sound damper 10. The reasons for this are as follows.

Generally, when the length of the sound damper is small, the position of the sound damper in the tire inner cavity is not stable, and it is difficult to maintain the shape of the sound damper. In addition, when the length of the sound damper is large, deformation such as buckling is likely to occur. Such defects may deteriorate the uniformity of the tire or damage the sound damper due to rubbing of the sound damper against the surface of the tire inner cavity or a rim. Therefore, in order to maintain the uniformity of the tire and the durability of the sound damper, it is essential to set the length of the sound damper to be in an appropriate range.

When the thickness of the sound damper is small, it is difficult to maintain the shape thereof (annular body). In addition, when the thickness of the sound damper is large, great stress is likely to act on the sound damper, so that defects such as damage to or wear of the sound damper are likely to occur along with running of the tire. Therefore, in order to maintain the uniformity of the tire and the durability of the sound damper, it is essential to consider not only the length of the sound damper but also the thickness of the sound damper and set these dimensions to be in an appropriate range.

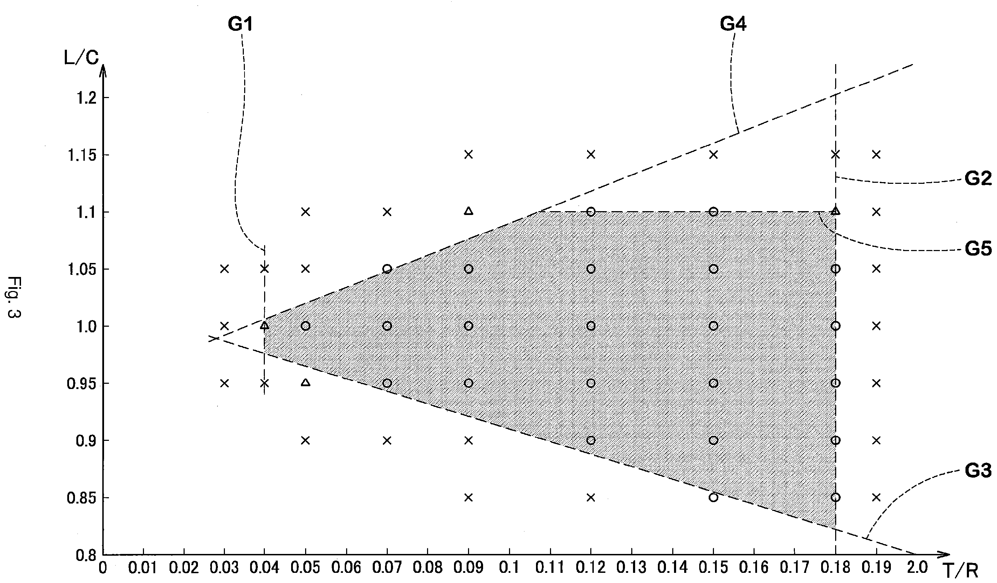

Based on the above findings, the inventors conducted various experiments. FIG. 3 shows the relationship between the dimensions of the sound damper and the occurrence of damage, etc., to the sound damper, as an illustration of the results of the above experiments. In FIG. 3, the horizontal axis indicates a ratio T/R of the average thickness T of the sound damper to the inner cavity surface radius R. The vertical axis indicates a ratio L/C of the circumferential length L of the sound damper to the inner cavity surface circumferential length C.

The inventors created sound dampers with T/R and L/C varied as appropriate, and test tires in which these sound dampers were placed. In addition, the inventors also evaluated the durability of the sound dampers in these test tires. This evaluation is overall evaluation performed by dropping a tire having a sound damper mounted thereon onto a floor from a height of 1 m to check whether or not the sound damper comes off (hereinafter referred to as "drop test"), and also by causing a test tire to run for a certain distance on a drum tester and then checking whether or not the sound damper becomes disarranged or damaged. In FIG. 3, "○", "△", and "×" indicate results of the durability evaluation for the respective test tires. "○" indicates that the sound damper did not become disarranged or damaged and is in good condition. "△" indicates that the sound damper became slightly disarranged or damaged at a level that causes no problem in use. "×" indicates that the sound damper easily came off in the above-described drop test, and the sound damper was excessively large, impairing durability and uniformity, etc., for which improvements are desirable.

As a result, it was found that good results were obtained at coordinates in a specific range (dotted in FIG. 3) as shown in FIG. 3. As a result of further analysis, it was found that the above specific range is a region surrounded by graphs G1 to G5 shown by broken lines in FIG. 3. In addition, it was found that the graphs G1 to G5 are specified by the following formulas.

Graph G1: T/R = 0.04
Graph G2: T/R = 0.18
Graph G3: L/C = 1.02 - 1.1 × T/R
Graph G4: L/C = 0.95 + 1.4 × T/R
Graph G5: L/C = 1.1

The inventors also confirmed by experiment that good results can be obtained in the above specific range even when various conditions, such as the type of the sound damper and the tire size, are changed, and thus completed the present invention. That is, in the present invention, the uniformity of the tire 1 and the durability of the sound damper 10 can be maintained by setting the dimensions of the sound damper 10 to be in a specific range (range satisfying the above formulas (1) to (3)).

In a preferable mode, any one, more preferably any two, of the following formulas (4) to (6) are satisfied. In a further preferable mode, all of the following formulas (4) to (6) are satisfied. Accordingly, the above-described effects are assuredly exhibited.

$$0.06 \leq T/R \leq 0.16 \qquad (4)$$

$$1.04 - 1.1 \times T/R \leq L/C \leq 0.94 + 1.4 \times T/R \qquad (5)$$

$$L/C \leq 1.08 \qquad (6)$$

Hereinafter, more detailed configurations of the present embodiment will be described. Each configuration described below shows a specific mode of the present embodiment. Therefore, it is needless to say that the present invention can achieve the above-described effect even when the configurations described below are not provided. In addition, even when any one of the configurations described below is independently applied to the tire according to the present invention having the above-described characteristics, performance improvement corresponding to each configuration can be expected. Furthermore, when some of the configurations described below are applied in combination, complex performance improvement corresponding to each configuration can be expected.

Unless otherwise noted, the dimensions of the sound damper 10 described below are dimensions measured in a state where the tire 1 is not fitted on a rim, the distance between a pair of the bead cores 5 is caused to coincide with that in the above standardized state, and the sound damper 10 is placed in the tire inner cavity 1B.

As shown in FIG. 1, for example, a porous sponge material is employed for the sound damper 10. For example, a material obtained by foaming a rubber or a synthetic resin and having open cells is employed as the sponge material. In a preferable mode, a polyurethane sponge having both ether and ester bonds is employed for the sound damper 10. However, the present invention is not limited to such modes.

If the air permeability of the sound damper 10 is in a specific range, when a puncture of the tire 1 is repaired using a puncture sealing agent, the sound damper 10 absorbs and holds the puncture sealing agent, and the puncture sealing agent is less likely to reach the puncture hole. From this viewpoint, the air permeability of the sound damper 10 is, for example, preferably 27 ml/cm$^2$/s or lower. Accordingly, the above defect can be suppressed. The air permeability is measured in accordance with JIS K6400-7.

If the air permeability of the sound damper 10 is high, even when the sound damper 10 absorbs the puncture sealing agent, the puncture sealing agent is easily discharged again therefrom, so that the above defect can be suppressed. From this viewpoint, the air permeability of the sound damper 10 may be, for example, 62 ml/cm$^2$/s or higher.

The density of the sound damper 10 is, for example, 5 to 60 kg/m$^3$ and preferably 10 to 50 kg/m$^3$. Such a sound damper 10 can exhibit an excellent sound-damping effect while suppressing an increase in tire weight. In addition, the hardness of the sound damper 10 is 20 to 120 N and preferably 40 to 100 N. Accordingly, it is possible to inhibit the sound damper 10 from being disarranged, while maintaining the workability of mounting the sound damper 10 during tire manufacturing. Here, the hardness of the sound damper 10 is a value measured in accordance with the D method in Section 6.7 among the measurement methods in Section 6 of JIS K6400.

As shown in FIG. 2, the sound damper 10 is positioned so as to intersect the tire equator plane Cs. The sound damper 10 is in contact with (but not adhered to) the surface of the tread portion 2 on the tire inner cavity 1B side. In addition, the sound damper 10 has a rectangular cross-section orthogonal to the tire circumferential direction. In a preferable mode, the cross-section of the sound damper 10 has a rectangular shape that is long in the tire axial direction. In addition, substantially the entirety (80% or more) in the circumferential direction of the sound damper 10 is in contact with the tire inner cavity 1B. Such a sound damper 10 can exhibit an excellent sound-damping effect and durability.

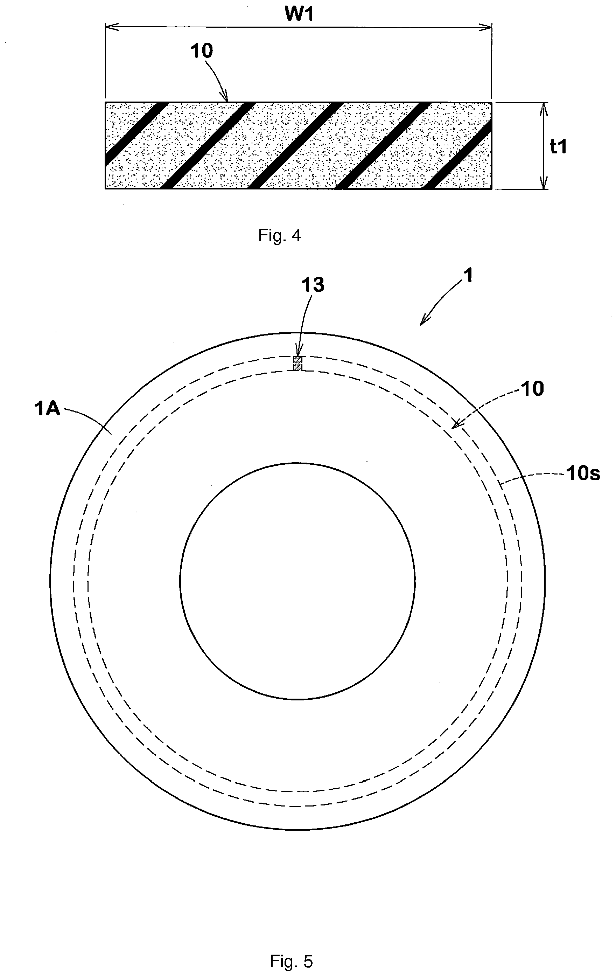

FIG. 4 shows an enlarged cross-sectional view of the sound damper 10. As shown in FIG. 4, a maximum thickness t1 in the tire radial direction of the sound damper 10 is 10 to 40 mm. In addition, a maximum width W1 of the sound damper 10 is 20% to 80% and preferably 20% to 40% of a cross-sectional width Wt (shown in FIG. 1) of the tire 1. Such a sound damper 10 is less likely to separate from the pneumatic tire body 1A during tire running. Therefore, wear of the sound damper 10 is suppressed.

The transverse cross-sectional area of the sound damper 10 (which is the cross-sectional area in a tire meridian cross-section) is 3 to 20% of the cross-sectional area of the tire 1 excluding the sound damper 10. Accordingly, an excellent sound-damping effect is exhibited while an increase in tire weight is suppressed.

FIG. 5 shows a diagram conceptually showing a side surface of the tire 1. In FIG. 5, the sound damper 10 is shown by broken lines. As shown in FIG. 5, the sound damper 10 of the present embodiment is bonded at both ends in the tire circumferential direction thereof to form the annular body. In FIG. 5, an adhered portion 13 between these ends is dotted. Such a sound damper 10 can inhibit end portions of the sound damper 10 from coming into contact with a rim, etc., and wearing, and excellent durability can be achieved.

Both ends of the sound damper 10 are adhered to each other, for example, by means of an adhesive. In another embodiment, these ends may be welded together (bonded to each other after the sponge material is melted by heat).

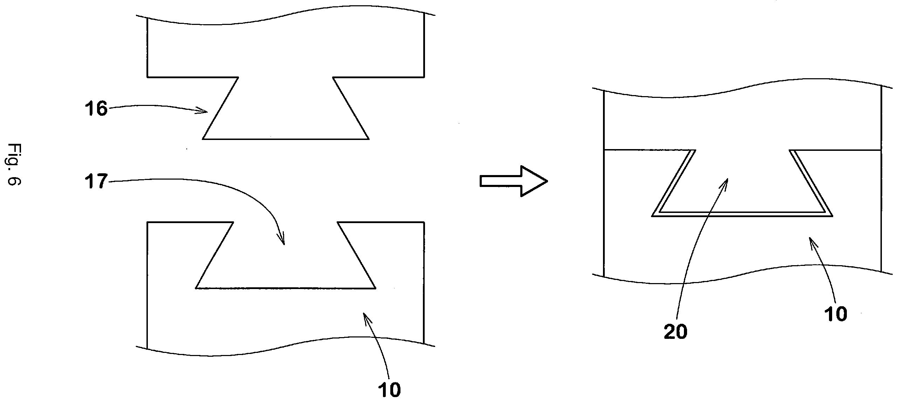

FIG. 6 shows enlarged views of both ends in the circumferential direction of a sound damper 10 of still another embodiment. As shown in FIG. 6, the sound damper 10 of this embodiment has a fitted portion 20 in which a projection 16 provided at one end in the circumferential direction thereof and a recess 17 provided at the other end in the circumferential direction thereof are fitted to each other. Accordingly, the sound damper 10 can be made into an annular body without using an adhesive or the like, so that the uniformity of the tire is further improved.

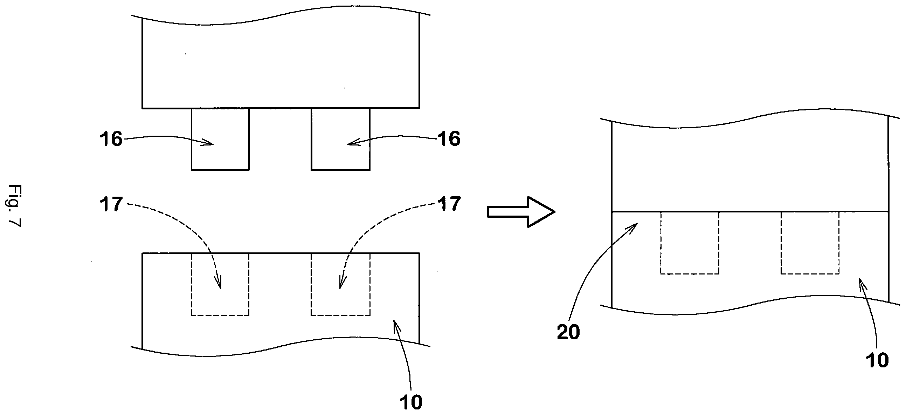

FIG. 7 shows enlarged views of both ends in the circumferential direction of a sound damper 10 of still another embodiment. As shown in FIG. 7, the sound damper 10 of this embodiment is provided with a plurality of projections 16 at one end in the circumferential direction thereof, and is also provided with a plurality of recesses 17 at the other end in the circumferential direction thereof. Each projection 16 has, for example, a columnar shape, and each recess 17 has an internal shape corresponding to the projection 16. A fitted portion 20 having such projections 16 and recesses 17 can suppress deformation of the sound damper 10 in the thickness direction.

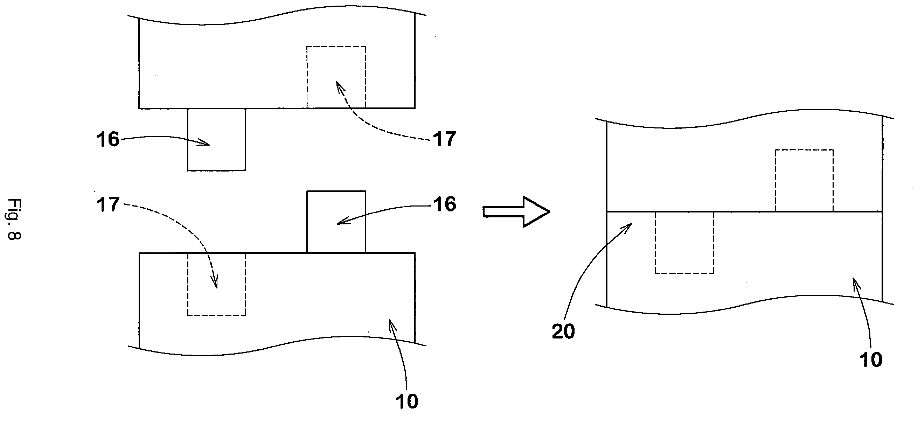

FIG. 8 shows enlarged views of both ends in the circumferential direction of a sound damper 10 of still another embodiment. As shown in FIG. 8, the sound damper 10 of this embodiment is provided with a projection 16 and a recess 17 at each of one end and the other end in the circumferential direction thereof. Each projection 16 has, for example, a columnar shape, and each recess 17 has an internal shape corresponding to the projection 16. In this embodiment, even when stress in multiple directions acts on a fitted portion 20, each projection 16 and each recess 17 are less likely to become disengaged from each other, so that excellent durability can be exhibited.

Although some embodiments of the pneumatic tire of the present invention have been described in detail above, the present invention is not limited to the above specific embodiments, and various modifications can be made to implement the present invention.

[Additional Note]

The present invention includes the following aspects.

[Present Invention 1]

A pneumatic tire including a tire inner cavity and a porous sound damper placed in the tire inner cavity, wherein

the sound damper is an annular body extending in a tire circumferential direction and is not adhered to a surface of the tire inner cavity,
the sound damper has a circumferential direction of the annular body and a thickness direction which is the same direction as a radial direction of the annular body,
an average thickness T (mm) of the sound damper and an inner cavity surface radius R (mm) which is a distance in a tire radial direction from a tire rotation axis to the surface of the tire inner cavity on a tire equator plane, satisfy the following formula (1), and
an average circumferential length L (mm) in the circumferential direction of the sound damper in a state where the sound damper is removed from the pneumatic tire, and an inner cavity surface circumferential length C (mm) which is a length in the tire circumferential direction of the surface of the tire inner cavity on the tire equator plane, satisfy the following formulas (2) and (3),

$$0.04 \leq T/R \leq 0.18 \quad (1),$$

$$1.02 - 1.1 \times T/R \leq L/C \leq 0.95 + 1.4 \times T/R \quad (2),$$

and

$$L/C \leq 1.1 \quad (3).$$

[Present Invention 2]

The pneumatic tire according to Present Invention 1, wherein

the sound damper has a width direction orthogonal to the thickness direction and the circumferential direction, and the sound damper has a maximum width which is 20% to 80% of a cross-sectional width of the pneumatic tire.

[Present Invention 3]

The pneumatic tire according to Present Invention 2, wherein the sound damper is positioned so as to intersect the tire equator plane.

[Present Invention 4]

The pneumatic tire according to any one of Present Inventions 1 to 3, wherein the sound damper is bonded at both ends in the circumferential direction thereof to form the annular body.

[Present Invention 5]

The pneumatic tire according to any one of Present Inventions 1 to 3, wherein the sound damper has a fitted portion in which a projection provided at one end in the circumferential direction thereof and a recess provided at another end in the circumferential direction thereof are fitted to each other.

[Present Invention 6]

The pneumatic tire according to any one of Present Inventions 1 to 5, wherein the sound damper has a rectangular cross-section.

[Present Invention 7]

The pneumatic tire according to any one of Present Inventions 1 to 6, wherein the sound damper has a density of 5 to 60 kg/m$^3$.

[Present Invention 8]

The pneumatic tire according to any one of Present Inventions 1 to 7, wherein the sound damper has a hardness of 20 to 120 N.

[Present Invention 9]

The pneumatic tire according to any one of Present Inventions 1 to 3, wherein the sound damper has a transverse cross-sectional area which is 3 to 20% of a cross-sectional area of the pneumatic tire excluding the sound damper.

**Claims**

1. A pneumatic tire (1) comprising a tire inner cavity (1B) and a porous sound damper (10) placed in the tire inner cavity (1B), wherein

   the sound damper (10) is an annular body extending in a tire circumferential direction and is not adhered to a surface (1s) of the tire inner cavity (1B),
   the sound damper (10) has a circumferential direction of the annular body and a thickness direction which is the same direction as a radial direction of the annular body,
   an average thickness T (mm) of the sound damper (10) and an inner cavity surface radius R (mm) which is a distance in a tire radial direction from a tire rotation axis to the surface (1s) of the tire inner cavity (1B) on a tire equator plane (Cs), satisfy the following formula (1), and
   an average circumferential length L (mm) in the circumferential direction of the sound damper (10) in a state where the sound damper (10) is removed from the pneumatic tire (1), and an inner cavity surface circumferential length C (mm) which is a length in the tire circumferential direction of the surface (1s) of the tire inner cavity (1B) on the tire equator plane (Cs), satisfy the following formulas (2) and (3),

$$0.04 \leq T/R \leq 0.18 \quad (1),$$

$$1.02 - 1.1 \times T/R \leq L/C \leq 0.95 + 1.4 \times T/R \quad (2),$$

   and

$$L/C \leq 1.1 \quad (3).$$

2. The pneumatic tire (1) according to claim 1, wherein

   the sound damper (10) has a width direction orthogonal to the thickness direction and the circumferential direction, and
   the sound damper (10) has a maximum width (W1) which is 20% to 80% of a cross-sectional width (Wt) of the pneumatic tire (1).

3. The pneumatic tire (1) according to claim 2, wherein the sound damper (10) is positioned so as to intersect the tire equator plane (Cs).

4. The pneumatic tire (1) according to any one of claims 1 to 3, wherein the sound damper (10) is bonded at both ends in the circumferential direction thereof to form the annular body.

5. The pneumatic tire (1) according to any one of claims 1 to 3, wherein the sound damper (10) has a fitted portion (20) in which a projection (16) provided at one end in the circumferential direction thereof and a recess (17) provided at another end in the circumferential direction thereof are fitted to each other.

6. The pneumatic tire (1) according to any one of claims 1 to 5, wherein the sound damper (10) has a rectangular cross-section.

7. The pneumatic tire (1) according to any one of claims 1 to 6, wherein the sound damper (10) has a density of 5 to 60 kg/m$^3$.

8. The pneumatic tire (1) according to any one of claims 1 to 7, wherein the sound damper (10) has a hardness of 20 to 120 N.

9. The pneumatic tire (1) according to any one of claims 1 to 3, wherein the sound damper (10) has a transverse cross-sectional area which is 3 to 20% of a cross-sectional area of the pneumatic tire (1) excluding the sound damper (10).

Fig. 1

Fig. 2

Fig. 3

W1

10

t1

Fig. 4

13

1

1A

10

10s

Fig. 5

Fig. 6

Fig. 7

Fig. 8

Europäisches
Patentamt

European
Patent Office

Office européen
des brevets

# EUROPEAN SEARCH REPORT

**Application Number**

EP 24 19 4637

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2012 111382 A (SUMITOMO RUBBER IND) 14 June 2012 (2012-06-14) * the whole document * | 1-9 | INV. B60C19/00 |
| A | US 2011/061781 A1 (TANNO ATSUSHI [JP]) 17 March 2011 (2011-03-17) * paragraph [0010] - paragraph [0019] * * paragraph [0029] - paragraph [0039] * * figures * | 1-4,6,8, 9 | |
| A | JP 2023 097897 A (SUMITOMO RUBBER IND) 10 July 2023 (2023-07-10) * paragraph [0015] - paragraph [0025] * * paragraph [0038] - paragraph [0051] * * figures * | 1-3,6-9 | |
| A | WO 2022/230219 A1 (BRIDGESTONE CORP [JP]) 3 November 2022 (2022-11-03) * abstract; figures * | 1,3,6,8 | |
| A | EP 1 253 025 A2 (SUMITOMO RUBBER IND [JP]) 30 October 2002 (2002-10-30) * paragraph [0008] - paragraph [0016] * * paragraph [0023] - paragraph [0030] * * figures * | 1,3,6 | **TECHNICAL FIELDS SEARCHED (IPC)**<br>B60C |

The present search report has been drawn up for all claims

| Place of search | Date of completion of the search | Examiner |
|---|---|---|
| Munich | 2 December 2024 | Avisse, Marylène |

## ANNEX TO THE EUROPEAN SEARCH REPORT
## ON EUROPEAN PATENT APPLICATION NO.

EP 24 19 4637

This annex lists the patent family members relating to the patent documents cited in  the above-mentioned European search report.
The members are as contained in the European Patent Office EDP file on
The European Patent Office is in no way liable for these particulars which are merely given for the purpose of information.

02-12-2024

| Patent document cited in search report | | Publication date | Patent family member(s) | | Publication date |
|---|---|---|---|---|---|
| JP 2012111382 | A | 14-06-2012 | NONE | | |
| US 2011061781 | A1 | 17-03-2011 | CN | 102019819 A | 20-04-2011 |
| | | | DE | 102010040483 A1 | 14-04-2011 |
| | | | JP | 4983876 B2 | 25-07-2012 |
| | | | JP | 2011057108 A | 24-03-2011 |
| | | | US | 2011061781 A1 | 17-03-2011 |
| JP 2023097897 | A | 10-07-2023 | CN | 116353252 A | 30-06-2023 |
| | | | EP | 4206001 A1 | 05-07-2023 |
| | | | JP | 2023097897 A | 10-07-2023 |
| WO 2022230219 | A1 | 03-11-2022 | CN | 117241948 A | 15-12-2023 |
| | | | EP | 4331865 A1 | 06-03-2024 |
| | | | JP | 7586761 B2 | 19-11-2024 |
| | | | JP | 2022170469 A | 10-11-2022 |
| | | | US | 2024157735 A1 | 16-05-2024 |
| | | | WO | 2022230219 A1 | 03-11-2022 |
| EP 1253025 | A2 | 30-10-2002 | DE | 60209053 T2 | 28-09-2006 |
| | | | EP | 1253025 A2 | 30-10-2002 |
| | | | US | 2003020320 A1 | 30-01-2003 |
| | | | US | 2003188817 A1 | 09-10-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012111382 A